# EUROPÄISCHE PATENTSCHRIFT

(11) **EP 1 481 158 B1**
(45) Veröffentlichungstag und Bekanntmachung des Hinweises auf die Patenterteilung: **30.07.2008**
(21) Anmeldenummer: 02787393.4
(22) Anmeldetag: 25.11.2002
(51) Int. Cl.: F02M 57/06, F02B 23/10, F02F 1/24

(54) **BRENNSTOFFEINSPRITZVENTIL-ZÜNDKERZE-KOMBINATION**
FUEL INJECTION VALVE-SPARK PLUG COMBINATION
COMBINAISON SOUPAPE D'INJECTION DE CARBURANT-BOUGIE D'ALLUMAGE

(30) Priorität: 06.12.2001 DE 10159908
(43) Veröffentlichungstag der Anmeldung: 01.12.2004
(73) Patentinhaber: ROBERT BOSCH GMBH, 70442 Stuttgart (DE)
(72) Erfinder: HERDEN, Werner, 70839 Gerlingen (DE); VOLZ, Dieter, 74080 Heilbronn (DE); WUERFEL, Gernot, 71665 Vaihingen/Enz (DE); MELSHEIMER, Anja, 70563 Stuttgart (DE); SCHMITTINGER, Simon, 71272 Renningen (DE); NORGAUER, Rainer, 71634 Ludwigsburg (DE); DEPONTE, Rene, 72135 Dettenhausen (DE)
(86) Internationale Anmeldenummer: PCT/DE2002/004315
(87) Internationale Veröffentlichungsnummer: WO 2003/054380

(56) Entgegenhaltungen:
- GB-A- 637 584
- US-A- 4 446 830
- US-A- 6 055 955

## Beschreibung

### Stand der Technik

Die Erfindung geht aus von einer Brennstoffeinspritzventil-Zündkerze-Kombination nach der Gattung des Anspruchs 1.

Aus der EP 0 661 446 A1 ist ein Brennstoffeinspritzventil mit einer integrierten Zündkerze bekannt. Das Brennstoffeinspritzventil mit integrierter Zündkerze dient zum direkten Einspritzen von Brennstoff in den Brennraum einer Brennkraftmaschine und zum Zünden des in den Brennraum eingespritzten Brennstoffs. Durch die kompakte Integration eines Brennstoffeinspritzventils mit einer Zündkerze kann Einbauraum am Zylinderkopf der Brennkraftmaschine eingespart werden. Das bekannte Brennstoffeinspritzventil mit integrierter Zündkerze weist einen Ventilkörper auf, der zusammen mit einem mittels einer Ventilnadel betätigbaren Ventilschließkörper einen Dichtsitz bildet, an welchen sich eine an einer dem Brennraum zugewandten Stirnfläche des Ventilkörpers ausmündende Abspritzöffnung anschließt. Der Ventilkörper ist durch einen keramischen Isolationskörper von einem in den Zylinderkopf der Brennkraftmaschine einschraubbaren Gehäusekörper hochspannungsfest isoliert. An dem Gehäusekörper befindet sich eine Masseelektrode, um ein Gegenpotential zu dem mit Hochspannung beaufschlagten Ventilkörper zu bilden. Bei Beaufschlagung des Ventilkörpers mit einer ausreichenden Hochspannung erfolgt ein Funkenüberschlag zwischen dem Ventilkörper und der mit dem Gehäusekörper verbundenen Masseelektrode.

Bei dem bekannten Brennstoffeinspritzventil mit integrierter Zündkerze ist jedoch nachteilig, daß die Position des Funkenüberschlags bezüglich des von der Abspritzöffnung abgespritzten Brennstoffstrahls nicht definiert ist, da der Funkenüberschlag an einer nahezu beliebigen Stelle im seitlichen Bereich eines Vorsprungs des Ventilkörpers erfolgen kann. Eine sichere Zündung der sogenannten Strahlwurzel des von der Abspritzöffnung abgespritzten Brennstoffstrahls ist bei dieser bekannten Bauweise nicht mit der notwendigen Sicherheit möglich. Eine sichere und zeitlich exakt definierte Entflammung des Brennstoffstrahls ist jedoch für eine Schadstoffreduzierung unbedingt erforderlich. Ferner kann an der Austrittsöffnung des Brennstoffstrahls eine stetig fortschreitende Verrußung oder Verkokung auftreten, die die abgespritzte Strahlform beeinflußt. Außerdem ist nachteilig, daß die Keramikumspritzung des Brennstoffeinspritzventils relativ kostenintensiv ist.

Ferner ist aus der US6055955A eine Brennstoffeinspritzventil-Zünd Kerze-Kombination bekannt, wobei das Brennstoffeinspritzventil und die Zündkerze in jeweils einer Ausnehmung des Zylinderkopfes der Brennkraftmaschine angeordnet sind. Hier sind Einspritzventil und Zündkerze nicht zu einer Montageeinheit zusammengefasst, sondern werden getrennt in der Zylinderkopf eingesetzt.

### Vorteile der Erfindung

Die erfindungsgemäße Brennstoffeinspritzventil-Zündkerze-Kombination mit den Merkmalen des Anspruchs 1 hat demgegenüber den Vorteil, daß durch die Anordnung des Brennstoffeinspritzventils und des Kerzensteins der Zündkerze in einem gemeinsamen Verbindungskörper, welcher an einer Stirnseite des Zylinderkopfs der Brennkraftmaschine angeordnet sein kann, eine optimale Anordnung der Bauteile relativ zueinander bei einfacher Montage und geringem Platzbedarf der Anordnung gegeben ist.

Durch die in den abhängigen Ansprüchen aufgeführten Maßnahmen sind vorteilhafte Weiterbildungen und Verbesserungen der im Hauptanspruch angegebenen Brennstoffeinspritzventil-Zündkerze-Kombination möglich.

Vorteilhafterweise ist der Kerzenstein durch eine Schraubhülse in dem Gehäuse gesichert. Der Kerzenstein wird dabei in die Halterung eingeschraubt.

Besonders vorteilhaft ist eine Neigung der Längsachse des Kerzensteins gegenüber der Längsachse des Brennstoffeinspritzventils, da ein direktes Anspritzen der Zündkerze durch das Brennstoffeinspritzventil vermieden werden kann.

Weiterhin ist von Vorteil, daß die Zündkerze und die Masseelektrode der Zündkerze jeweils unabhängig vom Brennstoffeinspritzventil austauschbar sind.

Vorteilhafterweise ist das Gehäuse aus Kunststoff in einfacher Weise kostengünstig herstellbar.

### Zeichnung

Ein Ausführungsbeispiel der Erfindung ist in der Zeichnung vereinfacht dargestellt und in der nachfolgenden Beschreibung näher erläutert. Es zeigt:

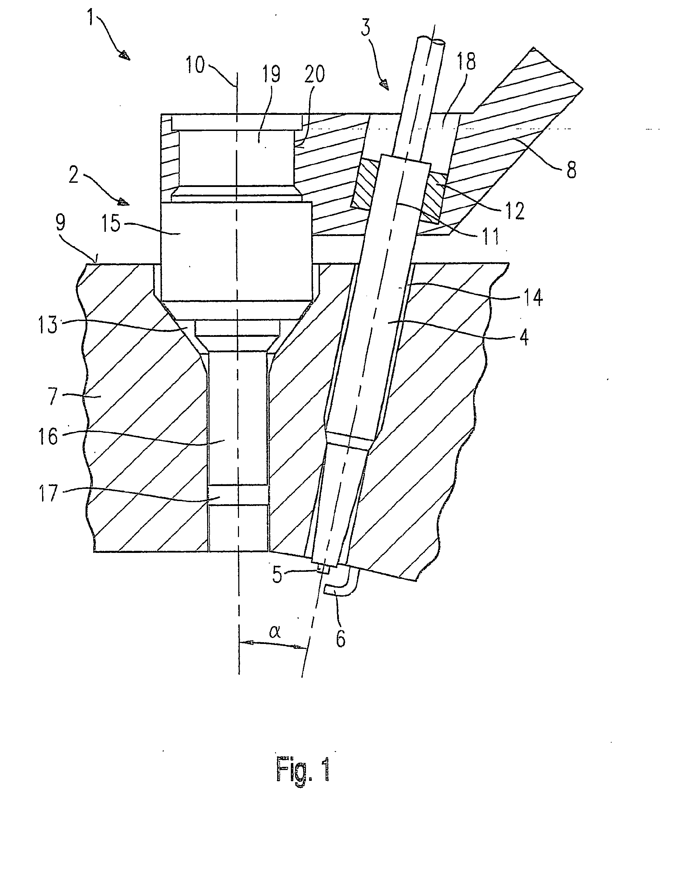

- Fig. 1: einen Schnitt durch ein Ausführungsbeispiel einer erfindungsgemäßen Brennstoffeinspritzventil-Zündkerze-Kombination.

### Beschreibung des Ausführungsbeispiels

In Fig. 1 ist eine Brennstoffeinspritzventil-Zündkerze-Kombination 1 mit einem Brennstoffeinspritzventil 2 zum direkten Einspritzen von Brennstoff in einen Brennraum einer gemischverdichtenden, fremdgezündeten Brennkraftmaschine und einer Zündkerze 3 zum Zünden des in den Brennraum eingespritzten Brennstoffs entsprechend einem bevorzugten Ausführungsbeispiel der Erfindung dargestellt.

Das Brennstoffeinspritzventil 2 weist dabei ein Ventilgehäuse 15 und einen Düsenkörper 16 auf. Das Brennstoffeinspritzventil 2 ist in einer ersten Aufnahmebohrung 13 einer Zylinderkopfes 7 der Brennkraftmaschine angeordnet und beispielsweise mittels einer Dichtung 17 gegen den Brennraum der Brennkraftmaschine abgedichtet.

Die Zündkerze 3 ist in üblicher Weise ausgebildet und besteht aus einem Kerzenstein 4, der vorzugsweise aus einem Keramikmaterial besteht, sowie einer darin angeordneten ersten Elektrode 5. Die erste Elektrode 5 ist elektrisch durch ein nicht weiter dargestelltes Zündgerät kontaktierbar und kann zentriert oder asymmetrisch in dem Kerzenstein 4 angeordnet sein. Mindestens eine zweite Elektrode 6 ist am Zylinderkopf 7 der Brennkraftmaschine angeordnet.

Ein Verbindungskörper 8, welcher das Brennstoffeinspritzventil 2 und die Zündkerze 3 aufnimmt, ist dabei so beschaffen, daß er das Ventilgehäuse 15 des Brennstoffeinspritzventils 2 zumindest teilweise umgibt, wobei das Brennstoffeinspritzventil 2 fest in den Verbindungskörper 8 integriert ist. Im Ausführungsbeispiel weist das Brennstoffeinspritzventil 2 an einem Brennstoffzulauf 19 eine umlaufende Nut 20 auf, die von dem Kunststoff des Verbindungskörpers 18 umspritzt ist. Der Verbindungskörper 8 weist weiterhin eine Ausnehmung 18 auf, in welche der Kerzenstein 4 der Zündkerze 3 einbringbar und mittels einer in der Ausnehmung 18 fest verankerten Schraub-oder Klemmhülse 12 mit dem Gehäuse 8 lösbar verbindbar ist. Der Kerzenstein 4 wird dabei in die Schraub- oder Klemmhülse 12 eingeschraubt oder eingeklemmt.

Der Kerzenstein 4 der Zündkerze 3 erstreckt sich in eine zweite Aufnahmebohrung 14 des Zylinderkopfes 7 der Brennkraftmaschine. Die Aufnahmebohrung 14 für den Kerzenstein 4 und die Aufnahmebohrung 13 für das Brennstoffeinspritzventil 2 sind dabei biaxial angeordnet und vorzugsweise unter einem beliebigen Winkel α, welcher zwischen einer Längsachse 10 des Brennstoffeinspritzventils 2 und einer Längsachse 11 des Kerzensteins 4 der Zündkerze 3 ausgebildet ist, geneigt.

Durch eine geeignete Wahl des Winkels α sowie der Geometrie eines Dichtsitzes und zumindest einer Abspritzöffnung des Brennstoffeinspritzventils 2 bzw. des Einspritzsträhls kann eine optimale Zündung der in den Brennraum eingespritzten Gemischwolke bei minimaler Thermoschockbelastung der Zündkerze 3 gewährleistet werden, wodurch der Brennstoffverbrauch und der Schadstoffausstoß der Brennkraftmaschine günstig beeinflußt werden.

Die Vorteile des erfindungsgemäß ausgestalteten Verbindungskörpers 8 gegenüber getrennt eingebauten Bauteilen liegen dabei in der einfachen Montierbarkeit, der Möglichkeit des separaten Austauschs des Kerzensteins 4 und der zweiten Elektrode 6 der Zündkerze 3 sowie in der Reduzierung des Einbauraums von Zündkerze 3 und Brennstoffeinspritzventil 2 gegenüber Einzelkomponenten im Zylinderkopf 7 der Brennkraftmaschine.

Die Vorteile gegenüber einer koaxialen Anordnung von Brennstoffeinspritzventil 2 und Zündkerze 3 liegen insbesondere in der erhöhten Haltbarkeit der Bauteile und einer Verbesserung des Kaltstartverhaltens der Brennkraftmaschine, da aufwendige Keramikummantelungen entfallen können. Dadurch werden auch die Herstellungs- und Servicekosten niedrig gehalten.

Die Erfindung ist nicht auf das dargestellte Ausführungsbeispiel beschränkt und für beliebige Bauweisen von Brennstoffeinspritzventilen und beliebige Neigungswinkel von Zündkerze 3 und Brennstoffeinspritzventil 2 zueinander anwendbar. Die Drehorientierung des Kerzensteins 4 kann durch geeignete Maßnahmen z. B. an dem Schraub- oder Klemmring 12 definiert werden, so daß auch unsymmetrische Kerzensteine 4, die einer Winkelorientierung bedürfen, eingesetzt werden können.

## Patentansprüche

1. Brennstoffeinspritzventil-Zündkerze-Kombination (1) mit einem Brennstoffeinspritzventil (2) zum direkten Einspritzen von Brennstoff in einen Brennraum einer Brennkraftmaschine und einer Zündkerze (3) zum Zünden des in den Brennraum eingespritzten Brennstoffs mit einem Kerzenstein (4), der eine erste Elektrode (5) aufweist, und mit einer zweiten Elektrode (6), wobei das Brennstoffeinspritzventil (2) und der Kerzenstein (4) der Zündkerze (3) in jeweils einer Ausnehmung (13; 14) eines Zylinderkopfes (7) der Brennkraftmaschine angeordnet sind,
**dadurch gekennzeichnet,**
**daß** das Brennstoffeinspritzventil (2) und der Kerzenstein (4) der Zündkerze (3) in einem außerhalb des Zylinderkopfes (7) angeordneten, gemeinsamen Verbindungskörper (8) fixiert sind.

2. Brennstoffeinspritzventil-Zündkerze-Kombination nach Anspruch 1,
**dadurch gekennzeichnet,**
**daß** der Verbindungskörper (8) an einer Stirnseite (9) des Zylinderkopfes (7) der Brennkraftmaschine angeordnet ist.

3. Brennstoffeinspritzventil-Zündkerze-Kombination nach Anspruch 1 oder 2,
**dadurch gekennzeichnet,**
**daß** der Verbindungskörper (8) aus einem Kunststoff besteht.

4. Brennstoffeinspritzventil-Zündkerze-Kombination nach Anspruch 3,
**dadurch gekennzeichnet,**
**daß** das Brennstoffeinspritzventil (2) an einem Brennstoffzulauf (19) eine umlaufende Nut (20) aufweist, die von dem Kunststoff des Verbiridungskörpers (8) umspritzt ist.

5. Brennstoffeinspritzventil Zündkerze-Kombinätion nach einem der Ansprüche 1 bis 4,
**dadurch gekennzeichnet,**
**daß** eine Längsachse (10) des Brennstoffeinspritzventils (2) gegenüber einer Längsachse (11) des Kerzensteins (4) der Zündkerze (3) unter einem Winkel (α) geneigt ist.

6. Brennstoffeinspritzventil-Zündkerze-Kombination nach einem der Ansprüche 1 bis 5,
**dadurch gekennzeichnet,**
**daß** der Kerzenstein (4) mit dem Verbindungskörper (8) lösbar verbunden ist.

7. Brennstoffeinspritzventil-Zündkerze-Kombination nach Anspruch 6,
**dadurch gekennzeichnet,**
**daß** der Kerzenstein (4) in den Verbindungskörper (8) eingeschraubt ist.

8. Brennstoffeinspritzventil-Zündkerze-Kombination nach Anspruch 7,
**dadurch gekennzeichnet,**
**daß** der Kerzenstein (4) mittels einer Schraub- oder Klemmhülse (12) in einer Ausnehmung (18) des Verbindungskörpers (8) fixiert ist.

## Claims

1. Fuel injection valve/spark plug combination (1) with a fuel injection valve (2) for the direct injection of fuel into a combustion space of an internal combustion engine and of a spark plug (3) for igniting the fuel injected into the combustion space, with a spark plug insulator (4) which has a first electrode (5) and with a second electrode (6), the fuel injection valve (2) and the spark plug insulator (4) of the spark plug (3) being arranged in each case in a recess (13; 14) of a cylinder head (7) of the internal combustion engine, **characterized in that** the fuel injection valve (2) and the spark plug insulator (4) of the spark plug (3) are fixed in a common connection body (8) arranged outside the cylinder head (7).

2. Fuel injection valve/spark plug combination according to Claim 1, **characterized in that** the connection body (8) is arranged on one end face (9) of the cylinder head (7) of the internal combustion engine.

3. Fuel injection valve/spark plug combination according to Claim 1 or 2, **characterized in that** the connection body (8) consists of a plastic.

4. Fuel injection valve/spark plug combination according to Claim 3, **characterized in that** the fuel injection valve (2) has at a fuel inflow (19) a peripheral groove (20), around which the plastic of the connection body (8) is injection-moulded.

5. Fuel injection valve/spark plug combination according to one of Claims 1 to 4, **characterized in that** a longitudinal axis (10) of the fuel injection valve (2) is inclined at an angle (α) with respect to a longitudinal axis (11) of the spark plug insulator (4) of the spark plug (3).

6. Fuel injection valve/spark plug combination according to one of Claims 1 to 5, **characterized in that** the spark plug insulator (4) is connected releasably to the connection body (8).

7. Fuel injection valve/spark plug combination according to Claim 6, **characterized in that** the spark plug insulator (4) is screwed into the connection body (8).

8. Fuel injection valve/spark plug combination according to Claim 7, **characterized in that** the spark plug insulator (4) is fixed in a recess (18) of the connection body (8) by means of a screwing or clamping sleeve (12).

## Revendications

1. Combinaison (1) formée d'une bougie et d'un injecteur de carburant comportant un injecteur de carburant (2) pour l'injection directe de carburant dans la chambre de combustion d'un moteur à combustion interne et d'une bougie (3) pour allumer le carburant injecté dans la chambre de combustion, la bougie comportant un isolateur (4) ayant une première électrode (5) ainsi qu'une seconde électrode (6),
l'injecteur de carburant (2) et l'isolateur (4) de la bougie (3) étant logés dans un puits respectif (13 ; 14) d'une culasse (7) du moteur à combustion interne,
**caractérisée en ce que**
l'injecteur de carburant (2) et l'isolateur (4) de la bougie (3) sont bloqués dans un organe de liaison (8), commun, installé à l'extérieur de la culasse (7).

2. Combinaison bougie d'allumage/injecteur de carburant selon la revendication 1,
**caractérisée en ce que**
l'organe de liaison (8) est installé sur la face frontale (9) de la culasse (7) du moteur à combustion interne.

3. Combinaison bougie d'allumage/injecteur de carburant selon la revendication 1 ou la revendication 2,
**caractérisée en ce que**
l'organe de liaison (8) est en matière plastique.

4. Combinaison bougie d'allumage/injecteur de carburant selon la revendication 3,
**caractérisée en ce que**
l'injecteur (2) comporte une rainure périphérique (20) au niveau de son arrivée de carburant (19), cette rainure étant surmoulée par l'injection de la matière plastique de l'organe de liaison (8).

5. Combinaison bougie d'allumage/injecteur de carburant selon l'une des revendications 1 à 4,
**caractérisée en ce que**
l'axe longitudinal (10) de l'injecteur de carbura t (2) est incliné par rapport à l'axe longitudinal (11) de l'isolateur (4) de la bougie (3) sous un angle (α).

6. Combinaison bougie d'allumage/injecteur de carburant selon l'une des revendications 1 à 5,
**caractérisée en ce que**
l'isolateur (4) est relié de manière amovible à l'organe de liaison (8).

7. Combinaison bougie d'allumage/injecteur de carburant selon la revendication 6,
**caractérisée en ce que**
l'isolateur (4) est vissé dans l'organe de liaison (8).

8. Combinaison bougie d'allumage/injecteur de carburant selon la revendication 7,
**caractérisée en ce que**
l'isolateur (4) est bloqué dans un puits (18) de l'organe de liaison (8) par l'intermédiaire d'un manchon de vissage ou de serrage (12).
